# EUROPEAN PATENT SPECIFICATION

(11) **EP 2 524 937 B1**
(45) Date of publication and mention of the grant of the patent: **05.11.2014**
(21) Application number: 11382150.8
(22) Date of filing: 16.05.2011
(51) Int. Cl.: C08G 64/14, C08G 64/30

(54) **Methods and systems for the continuous addition of branching agents into melt polycarbonate polymerization processes**
Verfahren und Systeme zur kontinuierlichen Zugabe von Verzweigungsmitteln in Schmelzpolycarbonat-Polymerisierungsverfahren
Procédés et systèmes pour l'ajout en continu d'agents de ramification dans des procédés de polymérisation de polycarbonate fondu

(43) Date of publication of application: 21.11.2012
(73) Proprietor: SABIC Innovative Plastics IP B.V., 4612 PX Bergen op Zoom (NL)
(72) Inventor: Vic Fernandez, Ignacio, 30151 Murcia (ES); Garcia Agudo, Jorge, 30012 Murcia (ES)
(74) Representative: Carpintero Lopez, Francisco

(56) References cited:
- JP-A- 9 059 225
- US-B1- 6 437 083

## Description

### Background of the Invention

In the manufacture of polycarbonates it is often desirable to incorporate branching agents as a means for increasing the melt strength of the resulting polymers. For example, 1,1,1-tris-(hydroxyphenyl) ethane (THPE) is commonly used in the polycarbonate manufacturing process to increase polymer melt strength. There are, however, two primary processes used for preparation of polycarbonates, the batch interfacial process and the continuous melt process. In the batch interfacial process, THPE branching agent can added quite simply as a solid at the formulation stage where it gets dissolved in the organic phase (dichloromethane) as it reacts. Introduction of THPE in the melt polycarbonate process is more difficult. The melt polycarbonate process is a solvent free process wherein monomers are continuously added in the molten stage to a closed formulation vessel. However, THPE has a relatively high melting point of approximately 247 °C. Thus addition of THPE as a molten monomer requires special heating capabilities given its high melting point, which translates into high investment costs to produce THPE based polycarbonate grades through the melt process. Given the limitations posed by the current technology, there is a need in the art for improved methods for introducing THPE and other branching agents into continuous melt polycarbonate systems.

### Summary of the Invention

This invention relates generally to methods and systems for the manufacture of melt polymerized branched polycarbonates. Though melt polycarbonate polymerization processes are conventionally solvent free, the methods of the present invention introduce branching agent into the melt process as a dissolved component in a solvent wherein the solvent comprises at least one C₁-C₄ alkanol. By first dissolving the branching agent into a solvent comprising at least one C₁-C₄ alkanol, branching agents that conventionally exhibit relatively high melting points can be introduced as a reactant into a melt polymerization process without the need for increased energy usage conventionally needed to melt the branching agent monomer such that it is in a molten state prior to reaction with other polycarbonate forming reactants in the melt process. Additionally, embodiments of the invention have the additional advantage in a fully continuous melt polymerization process of reducing the transition time when switching production between polycarbonate grades with and without the branching agent. For example, and without limitation, embodiments of the invention are capable of reducing the transition time by an amount of time in the range of from 4 to 12 hours.

In view of the foregoing advantages, in a first aspect, the invention generally provides a method of making a branched polycarbonate. The method comprises providing a polycarbonate precursor melt composition comprising an aromatic dihydroxy compound, a carbonic acid diester and a catalyst, and melt polymerizing the aromatic dihydroxy compound and the carbonic acid diester in the presence of a branching agent. The branching agent is introduced into the reactor system as a solution of the branching agent dissolved in a solvent wherein the solvent comprises at least one C₁-C₄ alkanol.

The invention generally provides a method for introducing a branching agent into a melt polycarbonate polymerization process. This method comprises providing at least one reactor configured to melt transesterify an aromatic dihydroxy compound and a carbonic acid diester. During a melt transesterification of the aromatic dihydroxy compound and the carbonic acid diester, the at least one reactor produces an overhead byproduct stream. A dissolved branching agent is introduced into the polymerization process through the overhead byproduct stream.

Additional advantages will be set forth in part in the description which follows or may be learned by practice. The advantages will be realized and attained by means of the elements and combinations particularly pointed out in the appended claims. It is to be understood that both the foregoing general description and the following detailed description are exemplary and explanatory only and are not restrictive, as claimed.

### Brief Description of the Drawings

The accompanying drawings, which are incorporated in and constitute a part of this specification, illustrate embodiments and together with the description, serve to explain the principles of the methods and systems:

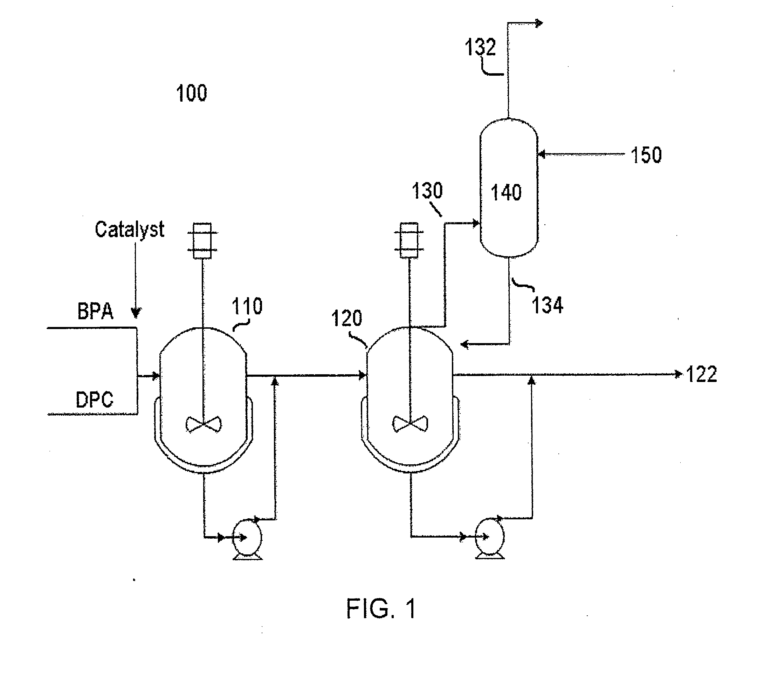

FIG. 1 is a schematic illustration of an exemplary melt polycarbonate reactor system according to embodiments of the invention wherein dissolved branching agent is introduced into the system through a scrubber unit in communication with a first oligomerization reactor.

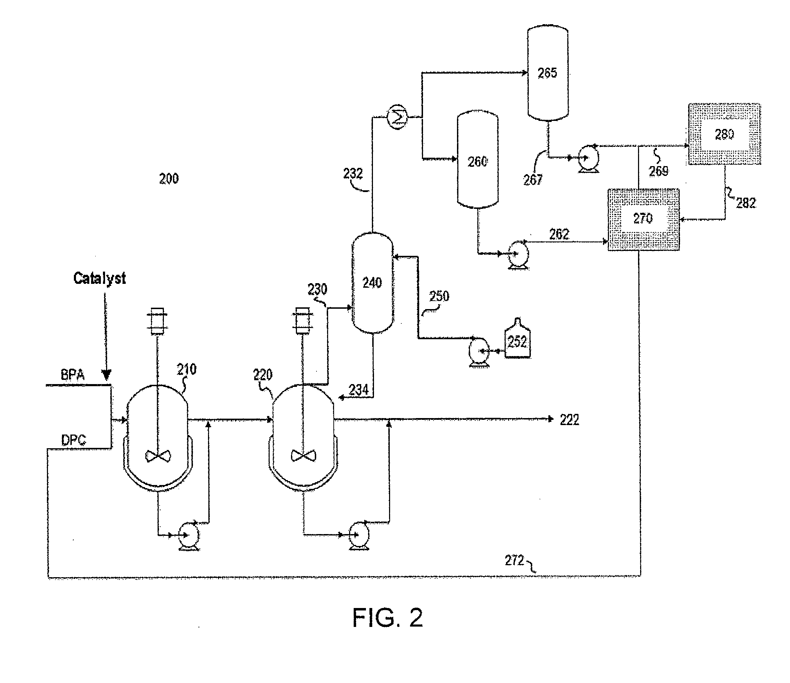

FIG. 2 is a schematic illustration of an exemplary continuous melt polycarbonate reactor system according to embodiments of the invention wherein dissolved branching agent is introduced into the system through a scrubber unit in communication with a first oligomerization reactor and wherein various byproduct streams are optionally used for subsequent melt polycarbonate processing.

### Detailed Description of the Invention

The present invention can be understood more readily by reference to the following detailed description, examples, drawings, and claims, and their previous and following description. However, before the present devices, systems, and/or methods are disclosed and described, it is to be understood that this invention is not limited to the specific devices, systems, and/or methods disclosed unless otherwise specified, as such can, of course, vary. It is also to be understood that the terminology used herein is for the purpose of describing particular aspects only and is not intended to be limiting.

The following description of the invention is provided as an enabling teaching of the invention in its best, currently known embodiment. To this end, those of ordinary skill in the relevant art will recognize and appreciate that many changes can be made to the various aspects of the invention described herein, while still obtaining the beneficial results of the present invention. It will also be apparent that some of the desired benefits of the present invention can be obtained by selecting some of the features of the present invention without utilizing other features. Accordingly, those of ordinary skill in the relevant art will recognize that many modifications and adaptations to the present invention are possible and can even be desirable in certain circumstances and are a part of the present invention. Thus, the following description is provided as illustrative of the principles of the present invention and not in limitation thereof.

As used throughout, the singular forms "a," "an" and "the" include plural referents unless the context clearly dictates otherwise. Thus, for example, reference to a "branching agent" can include two or more such branching agents unless the context indicates otherwise.

Ranges can be expressed herein as from "about" one particular value, and/or to "about" another particular value. When such a range is expressed, another aspect includes from the one particular value and/or to the other particular value. Similarly, when values are expressed as approximations, by use of the antecedent "about," it will be understood that the particular value forms another aspect. It will be further understood that the endpoints of each of the ranges are significant both in relation to the other endpoint, and independently of the other endpoint.

All ranges disclosed herein are inclusive of the endpoints and are independently combinable. The endpoints of the ranges and any values disclosed herein are not limited to the precise range or value; they are sufficiently imprecise to include values approximating these ranges and/or values. Ranges articulated within this disclosure, e.g. numerics/values, shall include disclosure for possession purposes and claim purposes of the individual points within the range, sub-ranges, and combinations thereof. As an example, for the recitation of numeric ranges herein, each intervening number there between with the same degree of precision is explicitly contemplated - for the range of 6-9, the numbers 7 and 8 are contemplated in addition to 6 and 9, and for the range 6.0-7.0, the number 6.0, 6.1, 6.2, 6.3, 6.4, 6.5, 6.6, 6.7, 6.8, 6.9, and 7.0 are explicitly contemplated.

Various combinations of elements of this disclosure are encompassed by this invention, e.g. combinations of elements from dependent claims that depend upon the same independent claim.

As used herein, the terms "optional" or "optionally" mean that the subsequently described event, condition, component, or circumstance may or may not occur, and that the description includes instances where said event or circumstance occurs and instances where it does not.

As summarized above, the present invention provides an improved melt polymerization method for making branched polycarbonates. Though melt polycarbonate polymerization processes are conventionally solvent free, the method of the present invention introduces the branching agent into the melt process as a dissolved component in a solvent. By first dissolving the branching agent into a solvent, branching agents that conventionally exhibit relatively high melting points can be introduced as a reactant into a melt polymerization process without the need for increased energy usage conventionally needed to melt the branching agent monomer such that it is in a molten state prior to reaction with other polycarbonate forming reactants in the melt process. According to embodiments described in more detail below, the solution of solvent and dissolved branching agent can also be selectively introduced into the melt polycarbonate reactor system in such a manner that prevents unwanted reactions between the solvent and oligomer or polymer streams within the reactor system.

Polycarbonates are conventionally manufactured through a transesterification reaction of an one or more aromatic dihydroxy compound(s) and a carbonic acid diester in the presence of one or more catalyst(s). The one or more dihydroxy aromatic compound(s)s that may be used in the transesterification reaction may include a dihydric phenol or a combination of dihydric phenols or a bisphenol or a combination of bisphenols or a combination of one more dihydric phenol(s) with one or more bisphenol(s). As one of ordinary skill in the art will appreciate, commonly used examples of dihydric phenols include but are not limited to resorcinol, catechol, hydroquinone, or 2-methyl hydroquioninone and the like. Examples of bisphenols include but are not limited to , Bisphenol A (BPA), 4,4'dihydroxybiphenyl, 1,1-bis(4-dihydroxy-3-methylphenyl)cyclohexane, 4,4'-(1-phenylethylidene)bisphenol, 4,4'dihydroxydiphenylsulfone, 4,4'-cyclohexylidenebisphenol and the like. Similarly, commonly used carbon acid diester reactants include diaryl carbonates, such as diphenyl carbonate (DPC) or activated diaryl carbonates, such as bismethylsalicylcarbonate (BMSC). In the following discussions of specific embodiments of the invention, DPC and BPA will be used as exemplary reactants for the formation of a polycarbonate. However, this usage is for convenience only and reflects the fact that DPC and BPA are among the most common reactants used in production of polycarbonates. It is not intended to limit the invention to these starting materials.

Likewise, in the following discussions of specific embodiments of the invention, 1,1,1-tris-(hydroxyphenyl) ethane (THPE) will be used as an exemplary branching agent. This usage is for convenience only and reflects the fact that THPE is a common branching agent used in the polycarbonate manufacturing process to increase polymer melt strength. Additionally, THPE exhibits a melting point of approximately 247°C and thus requires special heating capabilities to provide THPE as a molten monomer. These special heating capabilities translate into increased investment costs due to equipment and increased energy requirements. The exemplary use of THPE in the following discussion is not intended to limit the invention to the use of THPE as the branching agent.

The solvent selected for dissolving the branching agent can be any solvent capable of dissolving the branching agent, such as THPE, at a level sufficient to deliver or introduce the desired amount of branching agent into the melt polymerization reactor system but it comprises at least one C₁-C₄ alkanol. With reference again to the use of THPE branching agent, exemplary solvents that can be used include lower alkanols, such as for example C1 to C4 alkanols, including methanol, ethanol, propanol, such as n-propanol and isopropanol, n-butanol, or any mixture of two or more C1 to C4 alkanols. In an exemplary embodiment, methanol (MeOH) can be a desirable solvent for use with THPE branching agent as the THPE has a solubility of up to about 45 % wt in methanol at room temperature.

The amount of dissolved branching agent present in the solution can be any amount sufficient to provide a final branched polycarbonate comprising a desired amount of branching agent. For example, with reference again to the exemplary THPE branching agent, it can be desirable to introduce an amount of branching agent into the polymerization reaction that will result in a polycarbonate comprising up to about 1.5 mol % THPE in the final branched polycarbonate, including additional exemplary amounts of up to 0.5 mol% and up to 1.0 mol%. To that end, according in some exemplary and non-limiting embodiments of the invention, the amount of dissolved branching agent present in the solution can be an amount in the range of from 0.5 weight % to 50 weight %, including for example, 1 weight%, 5 weight%, 10 weight%, 15 weight%, 20 weight%, 25 weight%, 30 weight%, 35 weight%, 40 weight%, and 45 weight% relative to the total weight of the branching agent and solvent solution. In still further embodiments, the amount of dissolved branching agent present in the solution can be within a range derived from any of the exemplary amounts set forth above. For example, the branching agent can be present in the solution in an amount in the range of from 5 weight% to 45 weight%, or even from 10 weight% to 40 weight%, relative to the total weight of the branching agent and solvent solution.

Catalysts used in the melt transesterification polymerization production of polycarbonates are well-known in the art and include both alpha and beta catalysts. Beta catalyst are typically volatile and degrade at elevated temperatures. Beta catalysts are therefore preferred for use at early low-temperature polymerization stages. Alpha catalysts are typically more thermally stable and less volatile than beta catalysts.

The alpha catalyst suitable for use with the present invention will preferably comprise a source of alkali or alkaline earth ions. The source of these ions include alkaline earth hydroxides such as magnesium hydroxide and calcium hydroxide. Suitable sources of alkali metal ions include the alkali metal hydroxides illustrated by lithium hydroxide, sodium hydroxide and potassium hydroxide. Alkaline earth metal hydroxides are illustrated by calcium hydroxide and magnesium hydroxide. Of these sodium hydroxide is often preferred. The alpha catalyst typically will be used in an amount sufficient to provide between 1 x 10⁻⁴ and 1 x 10⁻⁸, preferably 1 x 10⁻⁴ and 1 x 10⁻⁷ moles of metal hydroxide per mole of the dihydroxy compounds employed.

Other sources of alkaline earth and alkali metal ions include salts of carboxylic acids, such as sodium acetate and derivatives of ethylene diamine tetra acetic acid (EDTA) such as EDTA tetrasodium salt, and EDTA magnesium disodium salt. In one embodiment of the present invention the alpha catalyst comprises at least one alkali metal salt of a carboxylic acid, at least one alkaline earth metal salt of a carboxylic acid, or combinations thereof. In one embodiment of the present invention the alpha catalyst comprises Na₂Mg EDTA or a salt thereof.

The alpha transesterification catalyst may also comprise one or more salts of a non-volatile inorganic acid. In one embodiment of the present invention the alpha catalyst comprises at least one salt of a non-volatile inorganic acid. Salts of non-volatile inorganic acids are illustrated by NaH₂ PO₃, NaH₂PO₄, Na₂HPO₃, KH₂PO₄, CsH₂PO₄, and Cs₂HPO₄. The alpha transesterification catalyst may comprise one or more mixed alkali metal salts of phosphoric acid. Examples of mixed alkali metal salts of phosphoric acid include NaKHPO₄, CsNaHPO₄, and CsKHPO₄.

Beta catalysts that can be used in accordance with the present invention preferably comprise a quaternary ammonium compound, a quaternary phosphonium compound, or a mixture thereof. The quaternary ammonium compound is preferably selected from the group of organic ammonium compounds having structure, 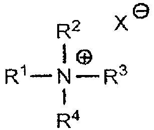 wherein R¹ - R⁴ are independently a C₁ - C₂₀ alkyl radical, C₄ - C₂₀ cycloalkyl radical, or a C₄ - C₂₀ aryl radical; and X- is an organic or inorganic anion. In one embodiment of the present invention anion X⁻ is selected from the group consisting of hydroxide, halide, carboxylate, sulfonate, sulfate, formate, carbonate, and bicarbonate. Non-limiting examples of suitable organic quaternary ammonium compounds are tetramethyl ammonium hydroxide, tetrabutyl ammonium hydroxide, tetramethyl ammonium acetate, tetramethyl ammonium formate and tetrabutyl ammonium acetate. Tetramethyl ammonium hydroxide is often preferred.

The quaternary phosphonium compound is preferably selected from the group of organic phosphonium compounds having structure, 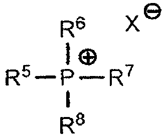 wherein R⁵ - R⁸ are independently a C¹ - C²⁰ alkyl radical, C⁴ - C²⁰ cycloalkyl radical, or a C₄ - C₂₀ aryl radical; and X⁻ is an organic or inorganic anion. In one embodiment of the present invention anion X⁻ is an anion selected from the group consisting of hydroxide, halide, carboxylate, sulfonate, sulfate, formate, carbonate, and bicarbonate. Suitable organic quaternary phosphonium compounds are illustrated by tetramethyl phosphonium hydroxide, tetramethyl phosphonium acetate, tetramethyl phosphonium formate, tetrabutyl phosphonium hydroxide, and tetrabutyl phosphonium acetate (TBPA). TBPA is often preferred. Where X⁻ is a polyvalent anion such as carbonate or sulfate it is understood that the positive and negative charges in the quaternary ammonium and phosphonium structures are properly balanced. For example, where R¹ - R⁴ are each methyl groups and X⁻ is carbonate, it is understood that X⁻ represents 2 (CO₃⁻²).

The amount of beta catalyst employed is typically based upon the total number of moles of dihydroxy compound employed in the polymerization reaction. When referring to the ratio of beta catalyst, for example phosphonium salt, to all dihydroxy compounds employed in the polymerization reaction, it is convenient to refer to moles of phosphonium salt per mole of the dihydroxy compound(s), meaning the number of moles of phosphonium salt divided by the sum of the moles of each individual dihydroxy compound present in the reaction mixture. The amount of organic ammonium or phosphonium salts employed typically will be in a range between 1 x 10⁻² and 1 x 10⁻⁵, preferably between 1 x 10⁻³ and 1 x 10⁻⁴ moles per mole of the dihydroxy compounds in the reaction mixture.

An exemplary and non-limiting embodiment of the invention is illustrated with reference to FIG. 1, which provides a schematic representation of a linear melt polymerization reactor system 100. As shown, BPA and DPC are charged into a continuous stirred tank or formulation vessel 110 at a desired predetermined molar ratio, where they are then heated to form a melt. Any suitable catalyst such as the conventionally known catalysts described above can also be combined with the BPA and DPC in the formulation vessel. After the mixing stage, the melt is then transferred from the formulation vessel to a first reactor 120. As exemplified, the first reactor represents a first oligomerization reactor where the BPA and DPC is first reacted to form relatively small oligomers. Though not shown, it should also be noted that additional catalyst can optionally be introduced into reactor 120 or any subsequent downstream reactor that may be present in the system.

The reaction of BPA and DPC in the first reactor 120 produces an overhead byproduct stream 130, which is in communication with a separation unit. The separation unit can, for example, be any conventional separation unit such as a scrubber, distillation column, pressure condenser, absorption unit, or other conventional mass transfer units. For purposes of the exemplary embodiment depicted in FIG. 1, separation unit 140 is shown as a scrubber unit 140. The byproduct stream comprises phenol, a byproduct of the melt transesterification of DPC and BPA. The phenol can be continuously removed from the first reactor and sent to the scrubber where it can be separated from small amounts of entrained DPC and BPA to provide a substantially purified phenol stream 132. The recovered DPC and BPA can optionally be returned to the oligomerization reactor by a return stream 134.

According to the exemplified embodiment shown in FIG. 1, a stream of dissolved branching agent 150 can be introduced into the reactor system 100 via the separation unit shown as scrubber 140. With reference again to an exemplary embodiment comprising the use of THPE branching agent dissolved in methanol solvent, one of ordinary skill in the art will appreciate that methanol has a relatively high level of reactivity with carbonate groups, both in the DPC monomer and in the resulting polycarbonate polymer. Thus, the presence of methanol can lead to undesired polymer chain scission and methyl end capping that ultimately hinders molecular weight build up. However, by introducing the dissolved branching agent into the scrubber under appropriate process conditions, the solvent such as methanol can flash out and be removed together with the substantially purified phenol, thus avoiding the introduction of the solvent into the portions of the system where undesired reaction with carbonates could occur. Under the appropriate conditions, a large enough phenol stream exists in the scrubber such that the THPE remains below the solubility limit and thus remains dissolved in the liquid phase of the phenol stream while the original solvent used to introduce the branching agent is removed. Solubility tests of THPE in phenol indicate that THPE is soluble at least up to 3 weight % in phenol when at 80°C. Thus, through the phenol stream, the THPE branching agent can flow to the first reactor where it then reacts with BPA and DPC to form a branched oligomer. After sufficient residence time in first reactor 120, the melt is then transferred via stream 122 to one or more subsequent reactor tanks (not shown) for completion of the melt polycarbonate polymerization.

Optimal process conditions at the point of introduction of the dissolved branching agent, including variables such as pressure and temperature, will of course vary depending on the particular branching agent and solvent used. Such conditions will be readily obtainable by one of ordinary skill in the art in view of this disclosure without the need for undue experimentation. However, by way of example and without limiting the scope of the disclosure, suitable process conditions can comprise maintaining the pressure within the scrubber in the range of from 50 mbar to 200 mbar, including for example 60 mbar, 70 mbar, 80 mbar, 90 mbar, 100 mbar, 110 mbar, 120 mbar, 130 mbar, 140 mbar, 150 mbar, 160 mbar, 170 mbar, 180 mbar or 190 mbar. In still further embodiments, the pressure within the scrubber can be within a range derived from any of the exemplary pressures set forth above. For example, the pressure can be in the range of from 130 mbar to 180 mbar. In still a further example, the pressure can be in the range of from 150 mbar to 180 mbar.

Temperatures within the scrubber can also range for example from 50°C to 190°C including 60°C, 70°C, 80°C, 90°C, 100°C, 110°C, 120°C, 130°C, 140°C, 150°C, 160°C, 170°C, and 180°C. In still further embodiments, the temperature within the scrubber can be within a range derived from any of the exemplary temperatures set forth above. For example, the temperature can be in the range of from 60°C to 180°C. in still a further example, the temperature can be in the range of from 120°C to 130°C.

According to further embodiments of the invention, it can be particularly desirable to select solvents for dissolving the branching agent that are otherwise conventionally used in other aspects of a melt polycarbonate manufacturing process. For example, alkanols are conventionally reacted according to know processes to form dialkyl carbonates. These dialkyl carbonates can then be reacted with phenol as intermediate monomers for the production of diphenyl carbonate, such as the DPC monomer used in the exemplified embodiments of the present invention. According to these embodiments, an alkanol solvent such as methanol that is separated and recovered from the scrubber 140 can optionally be directed to a dimethyl carbonate reaction unit where the separated methanol is reacted to provide dimethyl carbonate. This dimethyl carbonate can then be introduced into a diphenyl carbonate reaction unit to be reacted with phenol to provide a diphenyl carbonate.

It can also be desirable to select a solvent that corresponds to the particular dialkyl carbonate intermediate monomer used to prepare the selected diaryl carbonate. In melt polymerization processes where the dialkyl carbonate intermediate monomer used to provide a diaryl carbonate is the symmetric or asymmetric carbonate of a C1 to C4 alkanol it can be desirable to select the corresponding C1 to C4 alkanol as the solvent for dissolving branching agent. For example, if dimethyl carbonate is to be used to prepare a diphenyl carbonate, then according to embodiments of the invention it can be desirable to use methanol as the branching agent solvent. Similarly, if diethyl or dibutyl carbonate is to be used as an intermediate monomer for the preparation of a diphenyl carbonate, it can be desirable to select ethanol or butanol, respectively, as the branching agent solvent. Regardless of the selected C1 to C4 alcohol solvent, the recovery of the solvent from the scrubber can be effected in the same manner as with the methanol exemplified above since their respective boiling points are all still lower than that of the phenol overhead byproduct stream.

In the same manner, phenol separated from the scrubber can optionally be directed to a diphenyl carbonate reaction unit where the separated phenol is reacted with a diakly carbonate intermediate monomer to provide diphenyl carbonate. In turn, this provided diphenyl carbonate can optionally be introduced back into the formulation vessel as the DPC component in the polycarbonate precursor melt composition.

FIG. 2 provides a schematic illustration of a linear melt polymerization reactor 200 similar to that of FIG. 1 whereby a phenol byproduct and methanol solvent used for dissolving the THPE are both obtained as top product stream from a scrubber and are optionally directed downstream for subsequent processing. As shown, BPA, DPC, and a catalyst are charged into a continuous stirred tank or formulation vessel (210) at a desired predetermined molar ratio, where they are then heated to form a melt. After the mixing stage, the melt is then transferred from the formulation vessel to a first reactor 220. As exemplified, the first reactor represents a first oligomerization reactor where the BPA and DPC is first reacted to form relatively small oligomers.

A stream of dissolved branching agent 250 can be introduced into the reactor system 200 via the scrubber 240. Under appropriate process conditions as described above, the methanol solvent will flash out and be removed from the scrubber together with the substantially purified phenol in stream 232. A large enough phenol stream will exists in the scrubber such that the THPE remains below the solubility limit and thus remains dissolved in the liquid phase of the phenol stream. Thus, through the phenol stream, the THPE branching agent can flow down to the first reactor where it will then reacts with the BPA and DPC melt to form a branched oligomer. After sufficient residence time in first reaction 220, the melt is then transferred via stream 222 to one or more subsequent reactor tanks (not shown) for completion of the melt polycarbonate polymerization.

The reaction of BPA and DPC in the first reactor 220 produces an overhead byproduct stream 230, which is in communication with a scrubber or separator apparatus 240. The byproduct stream comprises phenol, a byproduct of the melt transesterification of DPC and BPA. The phenol can be continuously removed from the first reactor and sent to the scrubber where it can be separated from small amounts of entrained DPC and BPA. The recovered DPC and BPA can optionally be returned to the oligomerization reactor by a return stream 234.

Stream 232 comprising a mixture of phenol and the methanol can be recovered and separated for storage in respective phenol tank 260 and methanol tank 265. From storage tank 260, the phenol can optionally be used for processes related to the melt polymerization system. For example, a stream 262 of phenol can be directed to a diphenyl carbonate reaction unit 270. In reaction unit 270, the phenol can be reacted according to known processes with a dialkyl carbonate, such as dimethyl carbonate, to produce diphenyl carbonate. The produced DPC can optionally be recycled via stream 272 back to the formulation vessel 210. The methanol separated from byproduct stream 232 can similarly be used for subsequent processing if desired. For example, a stream of methanol 267 can be sent from storage tank 265 to a dialkyl carbonate reaction unit such as a dimethyl carbonate reaction unit 280 where it is reacted according to known processes to provide dimethyl carbonate. This dimethyl carbonate can optionally be directed by stream 282 back to the DPC unit 270 for use in further preparation of diphenyl carbonate. Methanol from storage tank 265 can also be used as solvent to prepare additional solution of dissolved branching agent 252.

As one of ordinary skill in the art will appreciate, methanol is also a byproduct of the DPC synthesis from DMC and phenol in reaction unit 270. According to embodiments of the invention, methanol produced from reaction unit 270 can be stored, either separately or together with the methanol in storage tank 265. Alternatively, methanol by product stream 269 from reaction unit 270 can also be directed to the dimethyl carbonate reaction unit 280 to be reacted to provide dimethyl carbonate. Still further, methanol by product stream 269 from reaction unit 270 can also be used as solvent to prepare additional solution of dissolved branching agent 252.

It will be appreciated that the specific number of oligomerization reactors and or polymerization reactors (not shown) in FIGS. 1 and 2 are not critical to the operation of the invention. Thus, for example, one may, if desired, use the methods of the invention in connection with a melt polymerization system comprising any number of oligomerization reactors. Similarly, following the oligomerization, one may, if desired, use the methods of the invention in connection with a melt polymerization system comprising any number of polymerization reactors. However, it should be noted that the method of the invention and, in particular, the point of introduction of dissolved branching agent, can occur at any oligomerization reactor present within a system. According to still further embodiments, if a melt polymerization system comprises more than one separation unit or scrubber apparatus atop consecutive oligomerization stages, the point of addition of dissolved branching agent can be at any oligomerization stage, including the further downstream to be equipped with such a separation unit.

### Examples

The following examples are put forth so as to provide those of ordinary skill in the art with a complete disclosure and description of how the methods, devices, and systems disclosed and claimed herein are made and evaluated, and are intended to be purely exemplary and are not intended to limit the disclosure. Efforts have been made to ensure accuracy with respect to numbers (e.g., amounts, temperature, etc.), but some errors and deviations should be accounted for. Unless indicated otherwise, parts are parts by weight, temperature is in C or is at ambient temperature, and pressure is at or near atmospheric.

### Example 1

In this example, 7 separate samples were prepared according to the following procedures whereby BPA and DPC were added into a linear melt polymerization pilot reactor system similar to that illustrated in FIG. 1. Specifically, 37.9 kg/h of molten BPA and 35.6 kg/h DPC were continuously fed into a formulation vessel 100 together with 50 microequivalents of the organic catalyst tetrabutyl phosphonium acetate. The formulation process was carried out at 170 °C and at atmospheric pressure with an average residence time in the range of from 2.5 to 3 hours. From the formulation vessel, the molten mixture of BPA, DPC and catalyst was then introduced into a first reactor 120 operating at a pressure of 180 mbar and a temperature of 257°C so that phenol by product could be removed and thus the reaction equilibrium was displaced. The average residence time in the reactor was in the range of 1.5 to 2 hours. 0.4 microequivalents of the inorganic catalyst NaKH₂PO₄ were also added to the reactor. A Scrubber column 140 was operated at the same pressure as the reactor 120 and the reflux ratio was set so that the head column temperature was in the range of from 124-126 °C, corresponding to a relatively high purity distilled phenol. A solution of THPE branching agent dissolved in methanol comprising 35 weight% THPE based upon the total weight of the methanol and THPE solution, was added to the scrubber at room temperature via a returned reflux phenol stream by a metering pump at room temperature in order to target a final polycarbonate product having 0.13 mol % THPE (on BPA basis ∼ 1600 ppm on PC basis).

Table 1 below summarizes the results of the final polycarbonate samples obtained from this Example. The data overall reveals the introduction of dissolved THPE into the scrubber successfully incorporated THPE into the final polycarbonate at or very near the targeted level without hindering molecular weight build up.

**Table 1**

| **Sample #** | **Molecular Weights (Daltons)** | **THPE Content (ppm)** |
|---|---|---|
| 1 | 44049 | 1541 |
| 2 | 44463 | - |
| 3 | 44320 | 1570 |
| 4 | 45244 | - |
| 5 | 44987 | 1643 |
| 6 | 44391 | 1575 |
| 7 | 44883 | 1573 |
| Average | 44620 | 1580 |
| Std. Dev. | 426 | 38 |

### Example 2

In this example, 7 separate samples were prepared according to the following procedures whereby BPA and DPC were added into a linear melt polymerization pilot reactor system similar to that illustrated in FIG. 1. Specifically, 37.9 kg/h of molten BPA and 35.6 kg/h DPC were continuously fed into a formulation vessel 100 together with 50 microequivalents of the organic catalyst tetrabutyl phosphonium acetate. The formulation process was carried out at 170 °C and at atmospheric pressure with an average residence time in the range of from 2.5 to 3 hours. From the formulation vessel, the molten mixture of BPA, DPC and catalyst was then introduced into a first reactor 120 operating at a pressure of 180 mbar and a temperature of 257°C so that phenol by product could be removed and thus the reaction equilibrium was displaced. The average residence time in the reactor was in the range of 1.5 to 2 hours. 0.4 microequivalents of the inorganic catalyst NaKH₂PO₄ were also added to the reactor. A Scrubber column 140 was operated at the same pressure as the reactor 120 and the reflux ratio was set so that the head column temperature was in the range of from 124-126 °C, corresponding to a relatively high purity distilled phenol. A solution of THPE branching agent dissolved in methanol comprising 35 weight% THPE based upon the total weight of the methanol and THPE solution, was added to the scrubber at room temperature via a returned reflux phenol stream by a metering pump at room temperature in order to target a final polycarbonate product having 0.26 mol % THPE (on BPA basis ∼ 3000 ppm on PC basis)

Table 2 below summarizes the results of the final polycarbonate samples obtained from this Example. The data overall reveals the introduction of dissolved THPE into the scrubber successfully incorporated THPE into the final polycarbonate at or very near the targeted level without hindering molecular weight build up.

**Table 2**

| **Sample #** | **Molecular Weight (Daltons)** | **THPE Content (ppm)** |
|---|---|---|
| 1 | 53785 | 2900 |
| 2 | 53826 | - |
| 3 | 54146 | 3135 |
| 4 | 53786 | - |
| 5 | 54196 | 3081 |
| 6 | 55683 | - |
| 7 | 51124 | 3048 |
| Average | 53792 | 3041 |
| Std. Dev. | 1353 | 101 |

## Claims

1. A method of making a branched polycarbonate, comprising:
a) providing a polycarbonate precursor melt composition comprising an aromatic dihydroxy compound, a carbonic acid diester, and a catalyst; and
b) melt polymerizing the aromatic dihydroxy compound and the carbonic acid diester in the presence of a branching agent within a reactor system containing at least the dihydroxy compound, the carbonic acid diester and the branching agent, wherein the branching agent is introduced into the reactor system as a solution of the branching agent dissolved in a solvent,
wherein the solvent comprises at least one C₁-C₄ alkanol, and wherein the reactor system comprises at least one reactor that produces an overhead byproduct stream in communication with a separation unit and wherein the dissolved branching agent is introduced into the reactor through the separation unit.

2. A method for introducing a branching agent into a melt polycarbonate polymerization process, comprising
a) providing at least one reactor configured to melt transesterify an aromatic dihydroxy compound and a carbonic acid diester, wherein during a melt transesterification of the aromatic dihydroxy compound and the carbonic acid diester, the at least one reactor produces an overhead byproduct stream in communication with a separation unit; and
b) introducing a solution comprising a branching agent dissolved in a solvent into the separation unit during the melt transesterification of the aromatic dihydroxy compound and the carbonic acid diester
wherein the solvent comprises at least one C₁-C₄ alkanol,
wherein the reactor system comprises at least one reactor that produces an overhead byproduct stream in communication with a separation unit and
wherein the dissolved branching agent is introduced into the reactor through the separation unit.

3. The method of claim 1, wherein the separation unit is a scrubber unit.

4. The method of any of claims 1 - 3, wherein the aromatic dihydroxy compound is a bisphenol and wherein the carbonic acid diester is a diaryl carbonate.

5. The method of claim 4, wherein the bisphenol is Bisphenol-A, wherein the diaryl carbonate is diphenyl carbonate, and wherein the branching agent is THPE.

6. The method of claim 4, wherein the bisphenol is Bisphenol-A, wherein the diaryl carbonate is an activated diaryl carbonate, and wherein the branching agent is THPE.

7. The method of claim 6, wherein the bisphenol is Bisphenol-A, wherein the diaryl carbonate is bismethylsalicylcarbonate, and wherein the branching agent is THPE.

8. The method of any of claims 1 - 7, wherein the at least one C₁-C₄ alkanol selected from the group consisting of methanol, ethanol, npropanol, isopropanol, n-butanol, or any mixture of two or more C₁-C₄ alkanols.

9. The method of any of claims 1 - 8, wherein the solvent comprises methanol.

10. The method of any of claims 1 - 9, wherein a phenol byproduct from said addition of diphenyl carbonate to said reactor is separated from the overhead byproduct stream in the separation unit, wherein the separated phenol byproduct which contains phenol is then directed to a diphenyl carbonate reaction unit where the separated phenol byproduct which contains phenol is reacted with dialkyl carbonate to provide diphenyl carbonate.

11. The method of any of claims 1 - 10, wherein the catalyst comprises a phosphonium salt.

12. The method of any of claims 1 - 10, wherein the catalyst comprises tetrabutyl phosphonium acetate.

13. The method of any of claims 1 - 10, wherein the catalyst comprises NaKH₂PO₄.

14. The method of claim 10, wherein the provided diphenyl carbonate is introduced into the polycarbonate precursor melt composition as a reactant in said reactor.

15. The method of claim 8, wherein at least one C₁-C₄ alkanol is separated from the separation unit and wherein the at least one separated C₁-C₄ alkanol is directed to a dialkyl carbonate reaction unit where the separated at least one C₁-C₄ alkanol is reacted to provide dialkyl carbonate.

16. The method of claim 15, wherein the provided dialkyl carbonate is introduced into a diphenyl carbonate reaction unit where the provided dialkyl carbonate is reacted with phenol to provide diphenyl carbonate.

17. The method of claim 15, wherein the at least one C₁-C₄ alkanol comprises methanol and wherein the methanol is reacted in the dialkyl carbonate reaction unit to provide dimethylcarbonate.

18. The method of claim 15, wherein the at least one C₁-C₄ alkanol comprises ethanol and wherein the ethanol is reacted in the dialkyl carbonate reaction unit to provide diethylcarbonate.

19. The method of claim 15, wherein the at least one a C₁-C₄ alkanol comprises propanol and wherein the propanol is reacted in the dialkyl carbonate reaction unit to provide dipropylcarbonate.

20. The method of claim 15, wherein the at least one C₁-C₄ alkanol comprises butanol and wherein the butanol is reacted in the dialkyl carbonate reaction unit to provide dibutylcarbonate.

21. The method of any of claims 1 - 10, wherein a mixture of phenol and at least one C₁-C₄ alkanol is separated from the separation unit.

22. The method of claim 21, wherein the phenol and the at least one C₁-C₄ alkanol of the mixture of phenol and at least one C₁-C₄ alkanol are separated.

23. The method of claim 22, wherein pheriol separated from the mixture of phenol and at least one C₁-C₄ alkanol is directed to a diphenyl carbonate reaction unit where the separated phenol is reacted with dialkyl carbonate to provide diphenyl carbonate.

24. The method of claim 23, wherein the at least one C₁-C₄ alkanol separated from the mixture of phenol and least one C₁-C₄ alkanol is directed to a dialkyl carbonate reaction unit where the separated at least one C₁-C₄ alkanol is reacted to provide dialkyl carbonate.

25. The method of claim 23, wherein the provided dialkyl carbonate is introduced into a diphenyl carbonate reaction unit where the provided dialkyl carbonate is reacted with phenol to provide diphenyl carbonate.

26. The method of claim 23, wherein the at least one C₁-C₄ alkanol comprises methanol and wherein the methanol is reacted in the dialkyl carbonate reaction unit to provide dimethylcarbonate.

27. The method of claim 25, wherein the at least one C₁-C₄ alkanol comprises ethanol and wherein the ethanol is reacted in the dialkyl carbonate reaction unit to provide diethylcarbonate.

28. The method of claim 25, wherein the at least one C₁-C₄ alkanol comprises butanol and wherein the butanol is reacted in the dialkyl carbonate reaction unit to provide dibutylcarbonate.

29. The method of any of claims 1 - 28, wherein the dissolved branching agent is present in the solution in an amount in the range of from 0.5 weight% to 50 weight%.

30. The method of any of claims 1 - 29, wherein the dissolved branching agent is present in the solution in an amount in the range of from 10 weight% to 40 weight%.

31. The method of any of claims 1 - 30, wherein process conditions within the separation unit are maintained at a pressure in the range of from 50 mbar to 200 mbar and at a temperature in the range of from 50 °C to 190 °C during introduction of the branching agent.

32. The method of claim 31, wherein process conditions within the separation unit are maintained at a pressure in the range of from 130 mbar to 180 mbar and at a temperature in the range of from 60 °C to 180 °C during introduction of the branching agent.

33. The method of Claim 1,
wherein the aromatic dihydroxy compound is a bisphenol, the carbonic acid diester is a diaryl carbonate, the catalyst is a phosphonium salt catalyst, the branching agent is a THPE branching agent, and the solvent is methanol.

## Patentansprüche

1. Verfahren zum Herstellen eines verzweigten Polycarbonats, umfassend:
a) Bereitstellen einer Polycarbonat-Precursor-Schmelzzusammensetzung, umfassend eine aromatische Dihydroxyverbindung, einen Carbonsäurediester und einen Katalysator; und
b) Schmelzpolymerisieren der aromatischen Dihydroxyverbindung und des Carbonsäurediesters in der Anwesenheit eines Verzweigungsmittels innerhalb eines Reaktorsystems, enthaltend wenigstens die Dihydroxyverbindung, den Carbonsäurediester und das Verzweigungsmittel, wobei das Verzweigungsmittel in das Reaktorsystem als eine Lösung des in einem Lösungsmittel aufgelösten Verzweigungsmittels eingebracht wird,
wobei das Lösungsmittel wenigstens einen C₁-C₄-Alkanol umfasst, und wobei das Reaktorsystem wenigstens einen Reaktor umfasst, der einen Overhead-Nebenprodukt-Strom, in Kommunikation mit einer Trenneinheit, erzeugt, und wobei das aufgelöste Verzweigungsmittel in den Reaktor durch die Trenneinheit eingebracht wird.

2. Verfahren zum Einbringen eines Verzweigungsmittels in einen Schmelz-Polycarbonat-Polymerisationsprozess, umfassend
a) Bereitstellen von wenigstens einem Reaktor, der konfiguriert ist, um eine aromatische Dihydroxyverbindung und einen Carbonsäurediester schmelz-umzuestem, wobei während einer Schmelz-Umesterung der aromatischen Dihydroxyverbindung und des Carbonsäurediesters der wenigstens eine Reaktor einen Overhead-Nebenprodukt-Strom in Kommunikation mit einer Trenneinheit erzeugt; und
b) Einbringen einer Lösung, umfassend ein in einem Lösungsmittel aufgelöstes Verzweigungsmittel, in die Trenneinheit während der Schmelz-Umesterung der aromatischen Dihydroxyverbindung und des Carbonsäurediesters,
wobei das Lösungsmittel wenigstens einen C₁-C₄-Alkanol umfasst,
wobei das Reaktorsystem wenigstens einen Reaktor umfasst, der einen Overhead-Nebenprodukt-Strom in Kommunikation mit einer Trenneinheit umfasst, und wobei das aufgelöste Verzweigungsmittel in den Reaktor durch die Trenneinheit eingebracht wird.

3. Verfahren nach Anspruch 1, wobei die Trenneinheit eine Scrubber-Einheit ist.

4. Verfahren nach einem der Ansprüche 1-3, wobei die aromatische Dihydroxyverbindung ein Bisphenol ist, und wobei der Carbonsäurediester ein Diarylcarbonat ist.

5. Verfahren nach Anspruch 4, wobei das Bisphenol Bisphenol-A ist, wobei das Diarylcarbonat Diphenylcarbonat ist, und wobei das Verzweigungsmittel THPE ist.

6. Verfahren nach Anspruch 4, wobei das Bisphenol Bisphenol-A ist, wobei das Diarylcarbonat ein aktiviertes Diarylcarbonat ist, und wobei das Verzweigungsmittel THPE ist.

7. Verfahren nach Anspruch 6, wobei das Bisphenol Bisphenol-A ist, wobei das Diarylcarbonat Bismethylsalicylcarbonat ist, und wobei das Verzweigungsmittel THPE ist.

8. Verfahren nach einem der Ansprüche 1-7, wobei der wenigstens eine C₁-C₄-Alkanol ausgewählt ist aus der Gruppe, bestehend aus Methanol, Ethanol, n-Propanol, Isopropanol, n-Butanol oder einer Mischung von zwei oder mehreren C₁-C₄-Alkanolen.

9. Verfahren nach einem der Ansprüche 1-8, wobei das Lösungsmittel Methanol umfasst.

10. Verfahren nach einem der Ansprüche 1-9, wobei ein Phenol-Nebenprodukt aus der Zugabe von Diphenylcarbonat zu dem Reaktor von dem Overhead-Nebenprodukt-Strom in der Trenneinheit abgetrennt wird, wobei das abgetrennte Phenol-Nebenprodukt, das Phenol enthält, dann zu einer Diphenylcarbonat-Reaktionseinheit geleitet wird, wo das abgetrennte Phenyl-Nebenprodukt, das Phenol enthält, mit Dialkylcarbonat umgesetzt wird, um Diphenylcarbonat bereitzustellen.

11. Verfahren nach einem der Ansprüche 1-10, wobei der Katalysator ein Phosphoniumsalz umfasst.

12. Verfahren nach einem der Ansprüche 1-10, wobei der Katalysator Tetrabutyl-Phosphoniumacetat umfasst.

13. Verfahren nach einem der Ansprüche 1-10, wobei der Katalysator NaKH₂PO₄ umfasst.

14. Verfahren nach Anspruch 10, wobei das bereitgestellt Diphenylcarbonat in die Polycarbonat-Precursor-Schmelzzusammensetzung als ein Reaktant in dem Reaktor eingebracht wird.

15. Verfahren nach Anspruch 8, wobei wenigstens ein C₁-C₄-Alkanol von der Trenneinheit abgetrennt wird, und wobei der wenigstens eine abgetrennte C₁-C₄-Alkanol zu einer Dialkylcarbonat-Reaktionseinheit geleitet wird, wo der abgetrennte wenigstens eine C₁-C₄-Alkanol umgesetzt wird, um Dialkylcarbonat bereitzustellen.

16. Verfahren nach Anspruch 15, wobei das bereitgestellte Dialkylcarbonat in eine Diphenylcarbonat-Reaktionseinheit eingebracht wird, wobei das bereitgestellte Dialkylcarbonat mit Phenol umgesetzt wird, um Diphenylcarbonat bereitzustellen.

17. Verfahren nach Anspruch 15, wobei der wenigstens eine C₁-C₄-Alkanol Methanol umfasst, und wobei das Methanol in der Dialkylcarbonat-Reaktionseinheit umgesetzt wird, um Dimethylcarbonat bereitzustellen.

18. Verfahren nach Anspruch 15, wobei der wenigstens eine C₁-C₄-Alkanol Ethanol umfasst, und wobei das Ethanol in der Dialkylcarbonat-Reaktionseinheit umgesetzt wird, um Diethylcarbonat bereitzustellen.

19. Verfahren nach Anspruch 15, wobei der wenigstens eine C₁-C₄-Alkanol Propanol umfasst, und wobei das Propanol in der Dialkylcarbonat-Reaktionseinheit umgesetzt wird, um Dipropylcarbonat bereitzustellen.

20. Verfahren nach Anspruch 15, wobei der wenigstens eine C₁-C₄-Alkanol Butanol umfasst, und wobei das Butanol in der Dialkylcarbonat-Reaktionseinheit umgesetzt wird, um Dibutylcarbonat bereitzustellen.

21. Verfahren nach einem der Ansprüche 1-10, wobei eine Mischung von Phenol und wenigstens einem C₁-C₄-Alkanol von der Trenneinheit abgetrennt wird.

22. Verfahren nach Anspruch 21, wobei das Phenol und wenigstens ein C₁-C₄-Alkanol aus der Mischung von Phenol und wenigstens einem C₁-C₄-Alkanol abgetrennt wird.

23. Verfahren nach Anspruch 22, wobei Phenol, abgetrennt von der Mischung aus Phenol und wenigstens einem C₁-C₄-Alkanol, zu einer Diphenylcarbonat-Reaktionseinheit geleitet wird, wobei das abgetrennte Phenol mit Dialkylcarbonat umgesetzt wird, um Diphenylcarbonat bereitzustellen.

24. Verfahren nach Anspruch 23, wobei der von der Mischung aus Phenol und wenigstens einem C₁-C₄-Alkanol abgetrennte wenigstens eine C₁-C₄-Alkanol zu einer Dialkylcarbonat-Reaktionseinheit geleitet wird, wo der abgetrennte wenigstens eine C₁-C₄-Alkanol umgesetzt wird, um Dialkylcarbonat bereitzustellen.

25. Verfahren nach Anspruch 23, wobei das bereitgestellte Dialkylcarbonat in eine Diphenylcarbonat-Reaktionseinheit eingebracht wird, wobei das bereitgestellte Dialkylcarbonat mit Phenol umgesetzt wird, um Diphenylcarbonat bereitzustellen.

26. Verfahren nach Anspruch 23, wobei der wenigstens eine C₁-C₄-Alkanol Methanol umfasst, und wobei das Methanol in der Dialkylcarbonat-Reaktionseinheit umgesetzt wird, um Dimethylcarbonat bereitzustellen.

27. Verfahren nach Anspruch 25, wobei der wenigstens eine C₁-C₄-Alkanol Ethanol umfasst, und wobei das Ethanol in der Dialkylcarbonat-Reaktionseinheit umgesetzt wird, um Diethylcarbonat bereitzustellen.

28. Verfahren nach Anspruch 25, wobei der wenigstens eine C₁-C₄-Alkanol Butanol umfasst, und wobei das Butanol in der Dialkylcarbonat-Reaktionseinheit umgesetzt wird, um Dibutylcarbonat bereitzustellen.

29. Verfahren nach einem der Ansprüche 1-28, wobei das aufgelöste Verzweigungsmittel in der Lösung in einer Menge im Bereich von 0,5 Gew.% bis 50 Gew.% vorliegt.

30. Verfahren nach einem der Ansprüche 1-29, wobei das aufgelöste Verzweigungsmittel in der Lösung in einer Menge im Bereich von 10 Gew.% bis 40 Gew.% vorliegt.

31. Verfahren nach einem der Ansprüche 1-30, wobei Prozessbedingungen innerhalb der Trenneinheit bei einem Druck im Bereich von 50 mbar bis 200 mbar und bei einer Temperatur im Bereich von 50°C bis 190°C während des Einbringens des Verzweigungsmittels gehalten werden.

32. Verfahren nach Anspruch 31, wobei Prozessbedingungen innerhalb der Trenneinheit bei einem Druck im Bereich von 130 mbar bis 180 mbar und bei einer Temperatur im Bereich von 60°C bis 180°C während des Einbringens des Verzweigungsmittels gehalten werden.

33. Verfahren nach Anspruch 1, wobei die aromatische Dihydroxyverbindung ein Bisphenol ist, der Carbonsäurediester ein Diarylcarbonat ist, der Katalysator ein Phosphoniumsalzkatalysator ist, das Verzweigungsmittel ein THPE-Verzweigungsmittel ist, und das Lösungsmittel Methanol ist.

## Revendications

1. Procédé de fabrication d'un polycarbonate ramifié, comprenant :
a) réaliser une composition fondue de précurseur de polycarbonate comprenant un composé dihydroxy aromatique, un diester d'acide carbonique et un catalyseur ; et
b) polymériser par fusion le composé dihydroxy aromatique et le diester d'acide carbonique en présence d'un agent de ramification dans un système de réacteur contenant au moins le composé dihydroxy, le diester de l'acide carbonique et l'agent de ramification, où l'agent de ramification est introduit dans le système de réacteur comme une solution de l'agent de ramification dissoute dans un solvant,
où le solvant comprend au moins un alcanol C₁-C₄, et où le système de réacteur comprend au moins un réacteur qui produit un flux de tête de sous-produit en communication avec une unité de séparation, et où l'agent de ramification dissout est introduit dans le réacteur à travers l'unité de séparation.

2. Procédé d'introduction d'un agent de ramification dans un processus de polymérisation de polycarbonate en fusion, comprenant
a) réaliser au moins un réacteur configuré pour la trans-estérification à l'état de fusion d'un composé dihydroxy aromatique et d'un diester d'acide carbonique, où durant une trans-estérification de fusion du composé dihydroxy aromatique et du diester d'acide carbonique, le au moins un réacteur produit un flux de tête de sous-produit en communication avec une unité de séparation ; et
b) introduire une solution comprenant un agent de ramification dissout dans un solvant dans l'unité de séparation durant la trans-estérification de fusion du composé dihydroxy aromatique et du diester de l'acide carbonique,
où le solvant comprend au moins un alcanol C₁-C₄,
où le système de réacteur comprend au moins un réacteur qui produit un flux de tête de sous-produit en communication avec une unité de séparation et
où l'agent de ramification dissout est introduit dans le réacteur à travers l'unité de séparation.

3. Procédé selon la revendication 1, dans lequel l'unité de séparation est une unité d'épuration.

4. Procédé selon l'une quelconque des revendications 1 à 3, dans lequel le composé dihydroxy aromatique est un bisphénol, et où le diester de l'acide carbonique est un carbonate de diaryle.

5. Procédé selon la revendication 4, dans lequel le bisphénol est le Bisphénol-A, où le carbonate de diaryl est le carbonate de diphényle, et où l'agent de ramification est le THPE.

6. Procédé selon la revendication 4, où le bisphénol est le Bisphénol-A, où le carbonate de diaryl est un carbonate de diaryle activé, et où l'agent de ramification est le THPE.

7. Procédé selon la revendication 6, dans lequel le bisphénol est le Bisphénol-A, où le carbonate de diaryle est le bisméthyl-salicylcarbonate, et où l'agent de ramification est le THPE.

8. Procédé selon l'une quelconque des revendications 1 à 7, dans lequel le au moins un alcanol C₁-C₄ est sélectionné dans le groupe consistant en méthanol, éthanol, n-propanol, isopropanol, n-butanol ou n'importe quel mélange de deux ou plusieurs alcanols C₁-C₄.

9. Procédé selon l'une quelconque des revendications 1 à 8, dans lequel le solvant comprend du méthanol.

10. Procédé selon l'une quelconque des revendications 1 à 9, dans lequel un sous-produit de phénol de ladite addition de carbonate de diphényle audit réacteur est séparé du flux de tête de sous-produit dans l'unité de séparation, où le sous-produit de phénol séparé qui contient du phénol est ensuite dirigé vers une unité de réaction de carbonate de diphényle où le sous-produit de phénol séparé qui contient du phénol est amené à réagir avec du carbonate de dialkyle pour fournir le carbonate de diphényle.

11. Procédé selon l'une quelconque des revendications 1 à 10, dans lequel le catalyseur comprend un sel de phosphonium.

12. Procédé selon l'une quelconque des revendications 1 à 10, dans lequel le catalyseur comprend du tétra-butyle phosphonium acétate.

13. Procédé selon l'une quelconque des revendications 1 à 10, dans lequel le catalyseur comprend NaKH₂PO₄.

14. Procédé selon la revendication 10, dans lequel le carbonate de diphényle obtenu est introduit dans la composition de fusion de précurseur de polycarbonate comme un réactif dans ledit réacteur.

15. Procédé selon la revendication 8, dans lequel au moins un alcanol C₁-C₄ est séparé de l'unité de séparation, et où au moins un alcanol C₁-C₄ séparé précité est dirigé vers une unité de réaction de carbonate de dialkyle où ledit au moins un alcanol C₁-C₄ séparé est amené à réagir pour produire du carbonate de dialkyle.

16. Procédé selon la revendication 15, dans lequel le carbonate de dialkyle obtenu est introduit dans une unité de réaction de carbonate de diphényle où le carbonate de dialkyle obtenu est amené à réagir avec du phénol pour fournir du carbonate de diphényle.

17. Procédé selon la revendication 15, dans lequel le au moins un alcanol C₁-C₄ comprend du méthanol et où le méthanol est amené à réagir dans l'unité de réaction de carbonate de dialkyle pour fournir du diméthylcarbonate.

18. Procédé selon la revendication 15, dans lequel le au moins un alcanol C₁-C₄ comprend de l'éthanol, et où l'éthanol est amené à réagit dans l'unité de réaction de carbonate de dialkyle pour fournir du diéthylcarbonate.

19. Procédé selon la revendication 15, dans lequel le au moins un alcanol C₁-C₄ comprend du propanol, et où le propanol est amené à réagir dans l'unité de réaction de carbonate de dialkyle pour fournir du dipropylcarbonate.

20. Procédé selon la revendication 15, dans lequel le au moins un alcanol C₁-C₄ comprend du butanol, et où le butanol est amené à réagir dans l'unité de réaction de carbonate de dialkyle pour fournir du dibutylcarbonate.

21. Procédé selon l'une quelconque des revendications 1 à 10, dans lequel un mélange de phénol et au moins un alcanol C₁-C₄ est séparé de l'unité de séparation.

22. Procédé selon la revendication 21, dans lequel le phénol et le au moins un alcanol C₁-C₄ du mélange de phénol et au moins un alcanol C₁-C₄ sont séparés.

23. Procédé selon la revendication 22, dans lequel le phénol séparé du mélange de phénol et au moins un alcanol C₁-C₄ et dirigé vers une unité de réaction de carbonate de diphényle où le phénol séparé est amené à réagir avec du carbonate de dialkyle pour fournir du carbonate de diphényle.

24. Procédé selon la revendication 23, dans lequel le au moins un alcanol C₁-C₄ séparé du mélange de phénol et au moins un alcanol C₁-C₄ est dirigé vers une unité de réaction de carbonate de dialkyle où le au moins un alcanol C₁-C₄ séparé est amené à réagir pour fournir du carbonate de dialkyle.

25. Procédé selon la revendication 23, dans lequel le carbonate de dialkyle obtenu est introduit dans une unité de réaction de carbonate de diphényle où le carbonate de dialkyle obtenu est amené à réagir avec du phénol pour fournir du carbonate de diphényle.

26. Procédé selon la revendication 23, dans lequel le au moins un alcanol C₁-C₄ comprend du méthanol, et où le méthanol est amené à réagir dans l'unité de réaction de carbonate de dialkyle pour fournir du carbonate de diméthyle.

27. Procédé selon la revendication 25, dans lequel le au moins un alcanol C₁-C₄ comprend de l'éthanol, et où l'éthanol est amené à réagir dans l'unité de réaction de carbonate de dialkyle pour fournir du carbonate de diéthyle.

28. Procédé selon la revendication 25, dans lequel le au moins un alcanol C₁-C₄ comprend du butanol et où le butanol est amené à réagir dans l'unité de réaction de carbonate de dialkyle pour fournir du carbonate de dibutyle.

29. Procédé selon l'une quelconque des revendications 1 à 28, dans lequel l'agent de ramification dissout est présent dans la solution en une quantité dans la plage de 0,5% en poids à 50% en poids.

30. Procédé selon l'une quelconque des revendications 1 à 29, dans lequel l'agent de ramification dissout est présent dans la solution en une quantité dans la plage de 10% en poids à 40% en poids.

31. Procédé selon l'une quelconque des revendication 1 à 30, dans lequel les conditions du processus dans l'unité de séparation sont maintenues à une pression dans la plage de 50 mbar à 200 mbar et à une température dans la plage de 50 °C à 190 °C durant l'introduction de l'agent de ramification.

32. Procédé selon la revendication 31, dans lequel les conditions du processus dans l'unité de séparation sont maintenues à une pression dans la plage de 130 mbar à 180 mbar et à une température dans la plage de 60 °C à 180 °C durant l'introduction de l'agent de ramification.

33. Procédé selon la revendication 1, dans lequel le composé dihydroxy aromatique est un bisphénol, le diester de l'acide carbonique est un carbonate de diaryle, le catalyseur est un catalyseur de sel de phosphonium, l'agent de ramification est un agent de ramification THPE et le solvant est le méthanol.
